# EUROPÄISCHE PATENTSCHRIFT

(11) **EP 1 382 274 B1**
(45) Veröffentlichungstag und Bekanntmachung des Hinweises auf die Patenterteilung: **08.12.2004**
(21) Anmeldenummer: 03012335.0
(22) Anmeldetag: 30.05.2003
(51) Int. Cl.: A47B 77/02

(54) **Grossküchen-Tischanlage mit Einbau-Modulen**
Kitchen worktop with inbuilt Modules
Plan de travail pour cuisine avec modules intégrés

(30) Priorität: 20.07.2002 DE 20210967 U
(43) Veröffentlichungstag der Anmeldung: 21.01.2004
(73) Patentinhaber: Hupfer Metallwerke GmbH & Co., 48653 Coesfeld (DE)
(72) Erfinder:
(74) Vertreter: Habbel, Lutz, Dipl.-Ing.

(56) Entgegenhaltungen:
- DE-A- 19 818 814
- DE-B- 1 149 149
- US-A- 2 907 618
- US-A- 3 301 622
- US-A- 5 826 437

## Beschreibung

Die Erfindung betrifft eine Großküchen-Arbeitstisch-Anlage nach dem Oberbegriff des Anspruchs 1.

Großküchen-Arbeitstische kennzeichnen sich durch ihre Ausführung aus Metall, üblicherweise Edelstahl, wobei als Arbeitstisch-Anlage ein Arbeitstisch bezeichnet wird, der außer dem Unterbau und der Tischplatte weitere Funktionalität in Form von Unterschränken aufweist, sodass der Raum unterhalb der Tischplatte optimal genutzt wird.

Unter dem Begriff "Großküche" werden Küchen bezeichnet, in welchen berufsmäßig und für eine größere Anzahl von Personen Mahlzeiten zubereitet werden, wie beispielsweise in Kantinen oder Krankenhäusern.

Die Herstellung der Unterschränke für derartige Großküchen-Arbeitstische erfolgt aus miteinander verschweißten Profilelementen und Tafeln, üblicherweise aus Edelstahl.

Diese Art der Herstellung von gattungsgemäßen Großküchen-Arbeitstisch-Anlagen ist an sich unkompliziert, erfordert jedoch ein erhebliches Maß an handwerklicher Arbeit. Abgesehen von diesem rein wirtschaftlichen Nachteil ergeben sich fertigungstechnische und insbesondere auch weitere wirtschaftliche Nachteile dann, wenn die Arbeitstisch-Anlage bestimmten Hygieneansprüchen, beispielsweise der Hygienestufe 2 oder der Hygienestufe 3 entsprechen soll. Dabei ist vorgesehen, dass beispielsweise im Bodenbereich oder auch über die gesamte Höhe eines Unterschrankes die Innenkanten fugenlos und mit gerundeten Ecken ausgestaltet sein müssen. Diese Herstellungsweise ist in Edelstahl aufwendig und dementsprechend kostenträchtig.

Die DE 198 18 814 A zeigt ein Hausgerät wie ein Kühl- oder Gefriergerät, welches von einem ein Gehäuse bildenden, schrankartigen Möbel-Umbau umgeben ist, wobei das Hausgerät einen vorteilhaft einfachen Einbau in den Möbel-Umbau ermöglichen soll. Hierzu sind eine Positionierleiste sowie Aufsteckteile vorgesehen, welche eine einfache und schnelle Zentrierung des Hausgerätes zwischen den Seitenwänden des Möbel-Umbaus ermöglichen sollen. Die Halterung mehrerer Hausgeräte in dem Möbel-Umbau ist nicht vorgesehen. Hinweise auf Großküchen und auf die dort bestehenden hygienischen Anforderungen oder auf die Ausgestaltung einer Tischanlage sind dieser Druckschrift nicht entnehmbar.

Die US 2 907 618 A zeigt Behälter, die schubladenartig in einem Möbel angeordnet sind und mittels separater Deckel verschließbar sind, wenn sie aus dem Möbel entnommen worden sind. Das Möbel ist nicht tischartig, sondern schrankartig mit einem Gehäuse ausgestaltet (engl.: "cabinet"), und die Behälter sind nicht wie Unterschränke an das Möbel angehängt, sondern stehen auf Fachböden auf, welche dieses schrankartige Möbel in mehrere Kammern unterteilen. Hinweise auf Großküchen und auf die dort bestehenden hygienischen Anforderungen oder auf die Ausgestaltung einer Tischanlage sind dieser Druckschrift nicht entnehmbar.

Die Übertragung der in der US 2 907 618 A vorgeschlagenen Konstruktion auf die Ausgestaltung einer Großküchen-Tischanlage würde es erfordern, einzelne Kammern mit dem eingangs als nachteilig erwähnten Aufwand herszustellen und zusätzliche Behälter in den Kammern zu verwenden, so daß eine derartige Großküchen-Tischanlage im Vergleich zu einer gattungsgemäßen, eingangs erwähnten Großküchen-Tischanlage wirtschaftlich noch nachteiliger wäre.

Die US 3 301 622 A zeigt einen türlosen, nach vorn offenen Behälter, der den Innenraum eines Schranks definiert und seinerseits von äußeren Wandflächen umgeben ist. Diese äußeren Wandflächen bilden den äußeren Rahmen des Schranks und tragen die evtl. vorgesehene Tür. Hinweise auf Großküchen und auf die dort bestehenden hygienischen Anforderungen oder auf die Ausgestaltung einer Tischanlage sind dieser Druckschrift nicht entnehmbar.

Bei den vorgenannten Druckschriften wird stets von einem kastenartigen Möbel mit flächigen Wänden ausgegangen, welche als "Möbelumbau", "cabinet", "cupboard" oder "Schrank" bezeichnet sind. Es ergeben sich daher Spalte oder Nischen zwischen dem Korpus des Möbels und dem darin angeordneten Hausgerät oder inneren Behälter, welche hygienisch nachteilig wären, falls'diese Möbel im Bereich der professionellen Lebensmittelverarbeitung - wie etwa in Großküchen - verwendet werden sollten. Dies ist jedoch bei keiner der vorgenannten Druckschriften angesprochen.

Die DE 1 149 149 B zeigt einen Schrank aus formgepreßten Teilen, die einander überlappen und durch verschiedene Überlappungsmaße unterschiedliche und stufenlos wählbare Schrankabmessungen ermöglichen. Weitere Schrankteile wie Sockel, Rückwand oder Boden können mit diesen überlappenden Teilen verbunden werden, um einen geschlossenen Schrank zu bilden. Der Schrank enthält keinen weiteren, am Schrank befestigten Behälter. Sollte jedoch der Schrank selbst als Behälter angesehen werden, so ist kein zusätzlich stützendes und den Behälter haltendes Möbel vorgesehen. Hinweise auf Großküchen und auf die dort bestehenden hygienischen Anforderungen oder auf die Ausgestaltung einer Tischanlage sind dieser Druckschrift nicht entnehmbar.

Der Erfindung liegt die Aufgabe zugrunde, eine gattungsgemäße Großküchen-Arbeitstisch-Anlage dahingehend zu verbessern, dass diese mit möglichst preisgünstigen Mitteln eine Herstellung auch von Arbeitstisch-Anlagen ermöglicht, die hohen hygienischen Anforderungen entsprechen.

Diese Aufgabe wird durch eine Großküchen-Arbeitstisch-Anlage mit den Merkmalen des Anspruchs 1 gelöst.

Die Erfindung schlägt mit anderen Worten vor, die einzelnen Unterschränke modulartig herzustellen und lösbar an dem Unterbau bzw. der Tischplatte zu befestigen. Statt einer einteiligen, verschweißten Edelstahlkonstruktion kann daher vorgesehen sein, die Unterschänke in Art einer Serienfertigung herzustellen. Hierzu kann ein für eine Serienfertigung geeignetes Herstellungsverfahren gewählt werden, welches mit preisgünstigen Mitteln die Herstellung der Unterschänke in einer den hygienischen Anforderungen entsprechenden Ausgestaltung ermöglicht.

Die lösbare Befestigung der einzelnen Unterschränke an der Tischplatte bzw. dem Unterbau ermöglicht es zudem, eine individuelle Konfiguration der Arbeitstisch-Anlage durch Verwendung unterschiedlicher Module zu ermöglichen, sodass dieselben Vorteile wie bei einer Einzelanfertigung zu allerdings geringeren Kosten verwirklicht werden können. Zudem kann auf einfache und kostengünstige Weise die Tischanlage umkonfiguriert werden, indem Module mit anderer Einteilung oder sonstigen anderen Eigenschaften gegen bestehende Module ausgetauscht werden.

Die Entnehmbarkeit des Unterschrankes dadurch, dass dieser lösbar an dem übrigen Arbeitstisch befestigt ist, bietet als zusätzlichen Vorteil die Möglichkeit, diesen Unterschrank beispielsweise mittels der in den Großküchen ohnehin vorhandenen Spülanlagen zuverlässig und mit den in Großküchen üblichen Reinigungsstandards zu reinigen, insbesondere bei einer leichtgewichtigen Ausbildung des Unterschrankes.

Insbesondere kann vorteilhaft vorgesehen sein, den Unterschrank als Kunststoffbehälter zu fertigen. Dies ermöglicht eine leichtgewichtige Ausgestaltung, sodass die Montage und Demontage des Unterschrankes problemlos möglich ist und dieser beispielsweise zum Reinigen ausgebaut werden kann. Zudem ermöglicht die Fertigung aus Kunststoff Herstellungsverfahren wie Tiefzieh-, Spritzguss- oder Blasverfahren, sodass mit preisgünstigen Mitteln eine Herstellung der Unterschränke in einer Formgebung und mit Materialien möglich ist, die den hygienischen Anforderungen entsprechen.

Die Ausgestaltung als Kunststoffbehälter kann insbesondere ermöglichen, dass der Korpus als einteiliger Behälter ausgestaltet ist und durch eine separate Tür verschlossen wird. Auf diese Weise kann die Tür gegebenenfalls ausgetauscht werden; andernfalls ist es auch denkbar, den gesamten Unterschrank einteilig herzustellen, also einschließlich der Tür, die beispielsweise ein Kunststoff-Filmscharnier aufweisen kann.

Bei einer separat vom Korpus des Unterschrankes ausgestalteten Tür kann diese als Funktionselement ausgestaltet sein und beispielsweise die Kühlung oder Beheizung des Unterschrankes ermöglichen, indem entsprechende Kühl- oder Heizaggregate, beispielsweise in Form eines Peltierelementes, in der Tür vorgesehen sind, wobei die Wärmeverteilung innerhalb des Unterschrankes durch ein Gebläse ermöglicht werden kann, welches ebenfalls in der Tür angeordnet ist.

Ein derartiges Gebläse kann auch ohne weitere Kühl- bzw. Heizeinrichtungen in der Tür vorgesehen sein. Beispielsweise können im Unterschrank Kälte- oder Wärmeakkus untergebracht werden, wobei dann das in der Tür vorgesehene Gebläse die möglichst gleichmäßige Temperaturverteilung innerhalb des Unterschrankes sicherstellen kann.

Die Anordnung der Gebläse- bzw. Heiz- bzw. Kühleinrichtungen in der separaten Tür ermöglicht es, die Tür zur Reinigung des Unterschrankes vom übrigen Korpus des Unterschrankes abzunehmen und den Korpus gründlich zu reinigen bzw. von der übrigen Arbeitstisch-Anlage zu trennen und in eine Spüleinrichtung zu geben.

Vorzugsweise können die Unterschränke Abmessungen aufweisen, die in der Gastronomie standardisiert sind. So können nicht nur Güter lose in den Unterschrank abgelegt werden, beispielsweise Geschirr und Besteck, sondern vielmehr können die Abmessungen beispielsweise zur Aufnahme ebenfalls standardisierter Tabletts dienen. Die Tabletts erleichtern einerseits die Beschickung der Unterschrankes oder die Entnahme von Gegenständen daraus, wenn diese Gegenstände gemeinsam mit dem Tablett ausserhalb des Unterschank gehandhabt werden können, und insbesondere erleichtern die Tabletts durch ihre Herausnehmbarkeit aus dem Unterschrank eine optimale Reinigung, nämlich sowohl der Tabletts als auch des übrigen Unterschrankes.

Zugunsten einer hohen Steifigkeit und Formstabilität des Unterschrankes sowie ggf. zugunsten einer hohen thermischen Isolationswirkung kann der Unterschrank doppelwandig ausgestaltet sein. Insbesondere bei Ausgestaltung als Kunststoffbehälter kann der Unterschrank aus einer Innenschale bestehen, welche einteilig und fugenlos hergestellt ist, und aus einer Außenschale, wobei Innen- und Außenschale miteinander wasserdicht verschweißt sind. Derartige Verschweißungen sind bei Kunststoff erheblich weniger aufwendig durchführbar als bei der Verwendung von Edelstahl als Material für den Unterschrank. Zwischen Innen- und Außenschale können je nach Anforderungen thermisch isolierende Materialien, ein Vakuum oder Versteifungsrippen vorgesehen sein.

Durch die Ausgestaltung der einzelnen Module in spezieller Anpassung an die Verwendung in einer Tischanlage können in besonders vorteilhafter Weise praxisgerechte Bedienbarkeit, einfache und hygienisch einwandfreie Reinigung, einfache Montage bzw. Demontage und eine variable Ausstattung der einzelnen Module erzielt werden sowie ein glattflächiges, hygienisch einwandfreies und leicht zu reinigendes Äußeres im Bereich des die Module aufnehmenden Unterschrankes.

In einer behelsfsartigen, jedoch besonders einfachen und preisgünstigen Ausgestaltung können ggf. Behälter als Unterschränke verwendet werden, die bereits in der Gastronomie üblich sind, beispielsweise als "Isoboxen" bezeichnete Kunststoffbehälter, welche mittels noch zu schaffender Adapter an dem übrigen Tisch zu befestigen wären. Diese Behälter entsprechen hohen hygienischen Anforderungen. Sie weisen Größen auf, welche den in der Gastronomie geltenden staatlichen industriellen oder wirtschaftlichen Normen entsprechen, so dass sie mit Einsätzen - wie Tabletts - bestückt werden können, welche ebenfalls diesen Normen enstprechen. Sie weisen Tabletthalterungen auf, so dass im einfachsten Fall diejenigen Tabletts als Fachböden des Unterschrankes dienen können, die ansonsten z. B. in den gastronomie-üblichen Tablett-Transportwagen verwendet werden. Sie weisen zudem Tragegriffe auf, so dass sie leicht zur Reinigung aus der Tischanlage genommen und gehandhabt werden können. Sie verfügen über abnehmbare Deckel, so dass wahlweise neu zu schaffende, mit Funktionselementen versehene Türen verwendet werden können, wobei diese mittels ebenfalls neu zu schaffender Halterungen als Scharniertüren schwenkbar sein können.

Ausführungsbeispiele der Erfindung werden anhand der Zeichnungen nachfolgend näher erläutert. Dabei zeigt
- Fig. 1: ein erstes Ausführungsbeispiel einer Tischanlage,
- Fig. 2 a - d: ein zweites, lediglich teilweise dargestelltes Ausführungsbeispiel einer Tischanlage,
- Fig. 3a - 5i: weitere Unterschränke in verschiedenen, teilweise geschnitten Ansichten

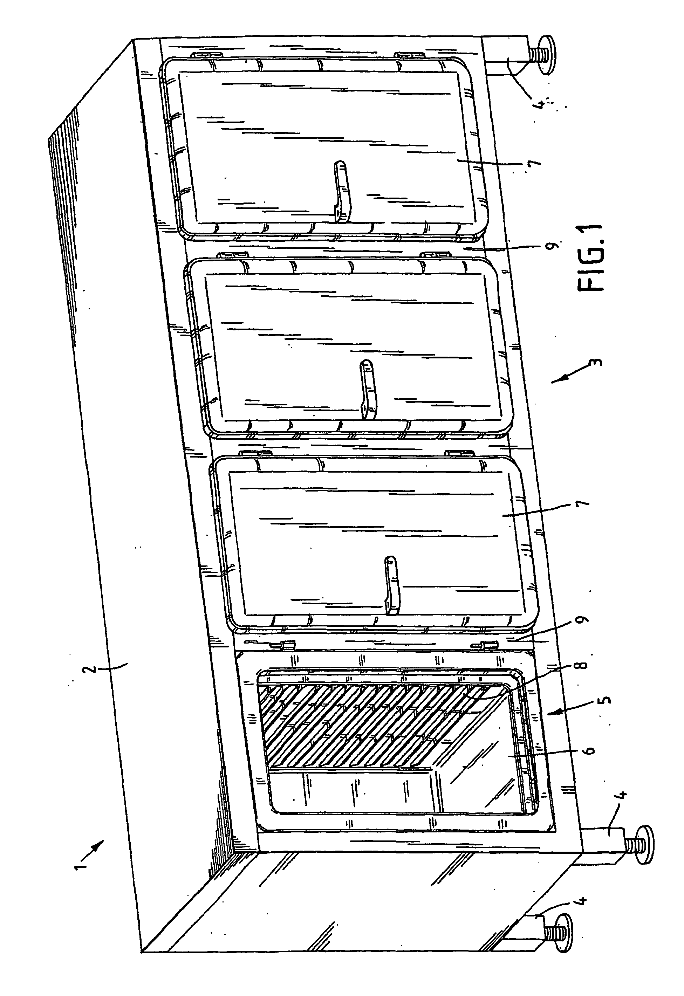

In Fig.1 ist mit 1 eine frei im Raum aufstellbare Großküchen-Arbeitstisch-Anlage bezeichnet, die eine Tischplatte 2 aufweist und einen Unterbau 3, wobei der Unterbau 3 einerseits ein Tischgestell mit Bodenstützen 4 aufweist, und andererseits mehrere Unterschränke 5, die in Befestigungselementen am übrigen Unterbau 3 bzw. an der Tischplatte 2 befestigt sind.

Die einzelnen Unterschränke 5 bestehen aus einerseits einem Kunststoffbehälter 6 und andererseits einer davon getrennt ausgestalteten Tür 7, wobei der Kunststoffbehälter 6 doppelwandig als Isolierbehälter ausgestaltet ist und an seinen Innenwänden Rippen 8 zur Aufnahme von Fachböden bzw. von in Standardgrößen vorhandenen Tabletts aufweist, welche dann als Fachböden des Unterschrankes 5 dienen.

Zwischen den einzelnen Unterschränken 5 sind Abdeckprofile 9 vorgesehen, welche Fugen zwischen den benachbarten Unterschränken 5 abdecken und so für eine hygienisch einwandfreie und verschmutzungsarme sowie leicht zu reinigende Front des Unterbaus 3 sorgen. Unterhalb der Unterschränke 5 ein über die gesamte Tischbreite durchlaufendes Bodenprofil vorgesehen, welches die Abdeckprofile 9 und ggf. auch die Unterschränke 5 stützt.

Die Türen 7 der Unterschränke 5 sind von den Kunststoffbehältern 6 abnehmbar, sodass die Kunststoffbehälter 6 problemlos aus der Großküchen-Arbeitstisch-Anlage 1 ausgebaut und in eine Spülmaschine gegeben werden können. Die Kunststoffbehälter 6 bestehen aus tiefgezogenem bzw. gespritztem bzw. geblasenem Kunststoff und weisen an ihren Innenwandungen abgerundete Ecken auf, wobei die gesamte innere Oberfläche des Kunststoffbehälters 6 fugenlos ausgestaltet ist, sodass dieser Behälter auch hohen hygienischen Anforderungen entspricht. Aufgrund der Doppelwandigkeit des Kunststoffbehälters 6 besteht dieser aus einem Innenteil, welches einteilig und fugenlos hergestellt ist, und aus einem Außenteil, welches ggf. ebenfalls einteig hergestellt ist. Zwischen Innen- und Außenteil befindet sich thermisch isolierendes Material. Innen- und Außenteil sind miteinander wasserdicht verschweißt.

Die Unterschränke 5, insbesondere die Kunststoffbehälter 6, können Laufrollen aufweisen oder Anschlussmittel in Form von Vorsprüngen und / oder Ausnehmungen, um auf einem mit Laufrollen versehenen Gestell verschiebesicher abgestellt bzw. verankert zu werden. Auf diese Weise können die Unterschränke 5 bzw. jeweils deren Korpus in Form eines Kunststoffbehälters 6 ohne großen Kraftaufwand von der Großküchen-Arbeitstisch-Anlage 1 zu einer Spüleinrichtung und wieder zurück verfahren werden.

Zugunsten eines modularen Aufbaus der Arbeitstisch-Anlage 1, wobei ggf. weniger als die dargestellten vier Unterschränke 5 vorgesehen sind, kann eine Ausgestaltung ohne das Bodenprofil vorgesehen sein. Um problemlos Unterschränke 5 mit unterschiedlichen Breiten verwenden und kombinieren zu können, oder um zwischen zwei benachbarten Unterschränken 5 freie Bereiche, z. B. einen offenen und dementsprechend gut belüfteten Bereich mit einer Stange zum Aufhängen von Trockentüchern schaffen zu können, kann zudem eine Ausgestaltung ohne die Abdeckprofile 9 vorgesehen sein.

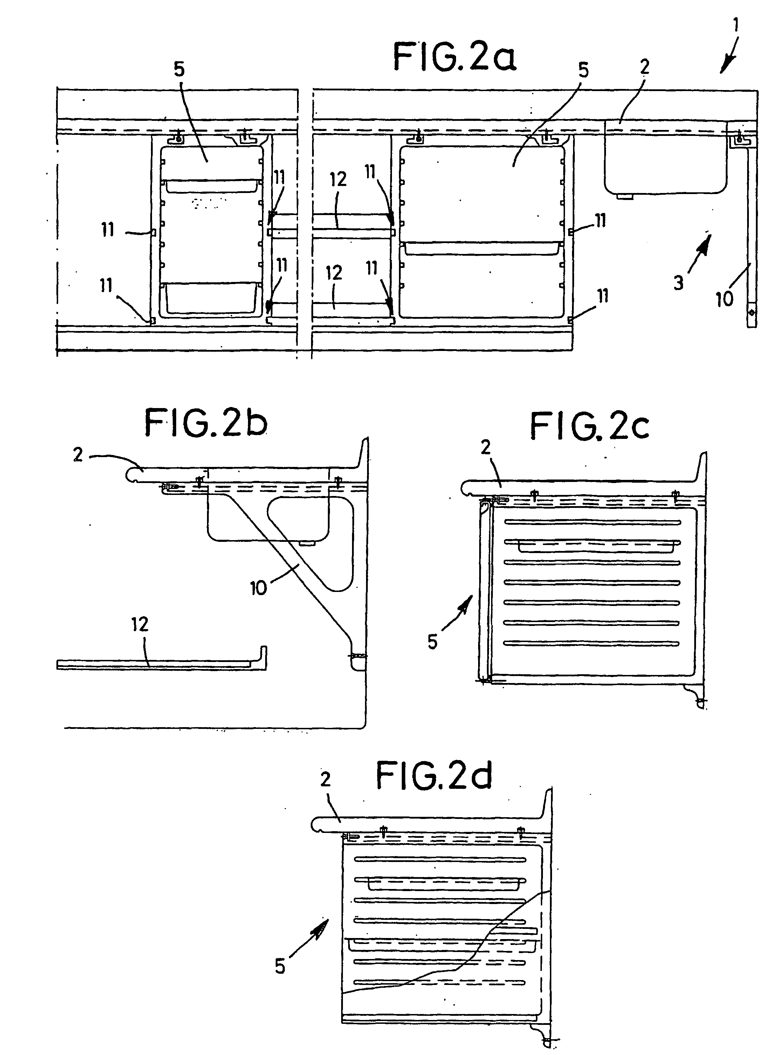

Fig. 2a zeigt eine derartige Tischanlage 1, welche für eine Wandbefestigung vorgesehen ist. Die Tischplatte 2 weist zur Wand hin eine Aufkantung auf und ist über Konsolen 10 an der Wand abgestützt. Unterschiedliche Unterschränke 5 mit unterschiedlichen Einrichtungen oder unterschiedlichen Abmessungen ermöglichen die Ausgestaltung des Unterbaus 3 in Anpassung an die individuellen Bedürfnisse der jeweiligen Küche.

Die Außenflächen der Unterschränke 5 weisen horizontale Nuten 11 auf, sodass zwischen zwei benachbarten Unterschränken 5 die Möglichkeit geschaffen wird, regalartige Ablagen zu schaffen. Insbesondere kann auf diese Weise ein Abstand zwischen zwei benachbarten Unterschränken 5 geschaffen werden, der eine wirksame thermische Trennung dieser beiden benachbarten Unterschränke 5 ermöglicht und der nicht ungenutzt bleibt, sondern mit Hilfe von Regalböden 12 als Ablagefläche bzw. Stauraum genutzt werden kann. Eine Fußleiste 14 unterhalb der Unterschränke 5 ermöglicht zum einen einen hygienisch dichten Anschluss an die Wand und kann dazu beitragen, die Unterschränke 5 zu halten und zu unterstützen. Die Fußleiste 14 ist hier nicht vorn bündig unter den Unterschränken 5 vorgesehen, sondern mit der Wand verbunden, wie insbesondere aus den Figuren 2c und 2d hervorgeht, welche Schnitte durch die beiden Unterschränke 5 von Fig. 2a darstellen. Fig. 2b stellt eine Seitenansicht auf die Tischanlage 1 von Fig. 2a dar und zeigt insbesondere die Konsole 10 sowie eine Seitenansicht auf ein Regalboden 12, der in Fig. 2b sich nicht in seiner Einbaulage befindet.

Weiterhin ist aus den Figuren 2a bis 2d die Halterung der einzelnen Unterschränke 5 unter der Tischplatte 2 erkennbar.

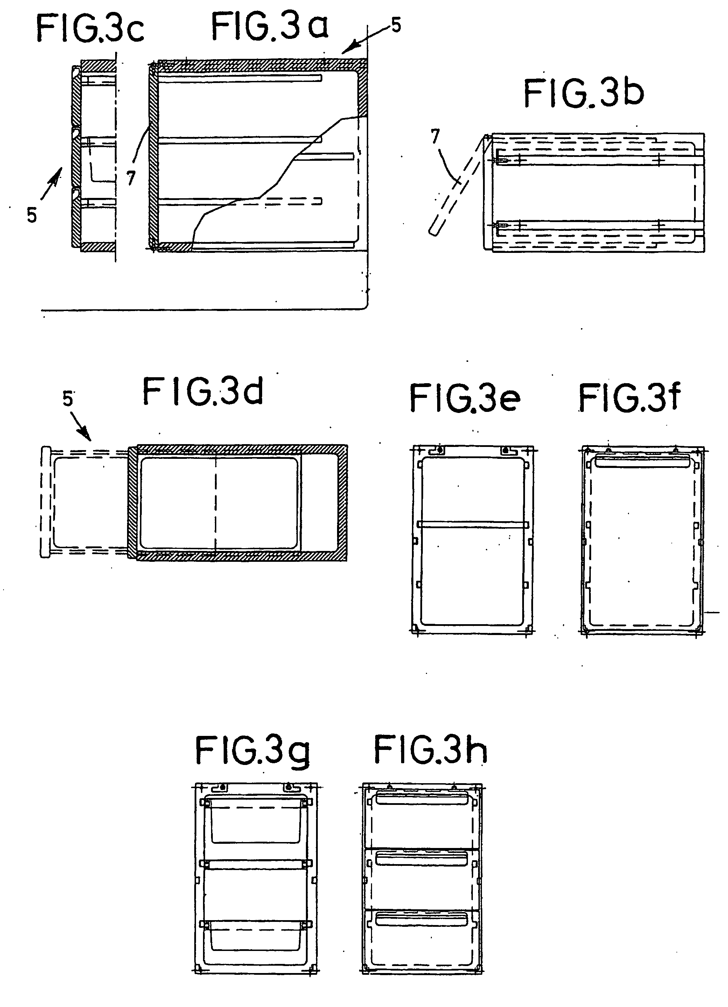

Die Figuren 3a und 3b zeigen einen Unterschrank 5 als Flügeltür-Schrank in einer Seitenansicht, teilweise geschnitten, sowie in einer Draufsicht. Die Figuren 3c und 3d zeigen einen gleichformatigen Unterschrank 5, allerdings als Schubtaden-Schrank mit drei Schubläden. Die Figuren 3e und 3f zeigen den Unterschrank 5 von Fig. 3a und 3b in einer Querschnittsansicht von vorn, wobei die Einteilbarkeit des Unterschrankes 5 ersichtlich ist.

Die Figuren 3g und 3h zeigen den Schrank der Figuren 3c und 3d, ebenfalls in einer Querschnittsansicht, wobei aus Fig. 3g ersichtlich ist, dass der Schrank Behälter mit sogenannten "Gastronorm"-Maßen aufnehmen kann.

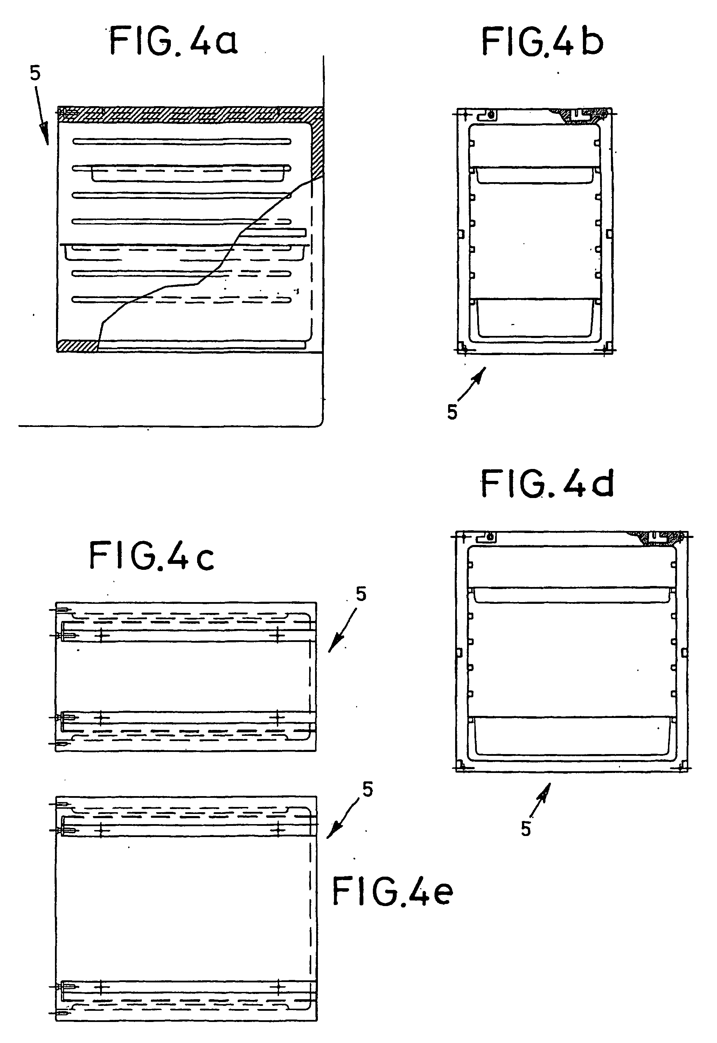

Die Figuren 4a bis 4e zeigen zwei verschiedene Unterschränke, wobei die Seitenansicht gemäß Fig. 4a stets gleich ist, und sich die Schränke gemäß Fig. 4b und 4c, welche einen schmaleren Schrank 5 zeigt, sowie gemäß 4d und 4e, welche den breiteren Unterschrank 5 zeigt, lediglich in der Breite unterscheiden, sodass die dargestellten Unterschränke 5 zur Aufnahme unterschiedlich großer Gastronorm-Behälter bzw. zur Aufnahme unterschiedlicher Anzahlen kleinerer Gastronorm-Behälter geeignet sind, wobei die in den Figuren 4a bis 4e dargestellten Schränke offene Schränke ohne eine vordere Tür sind.

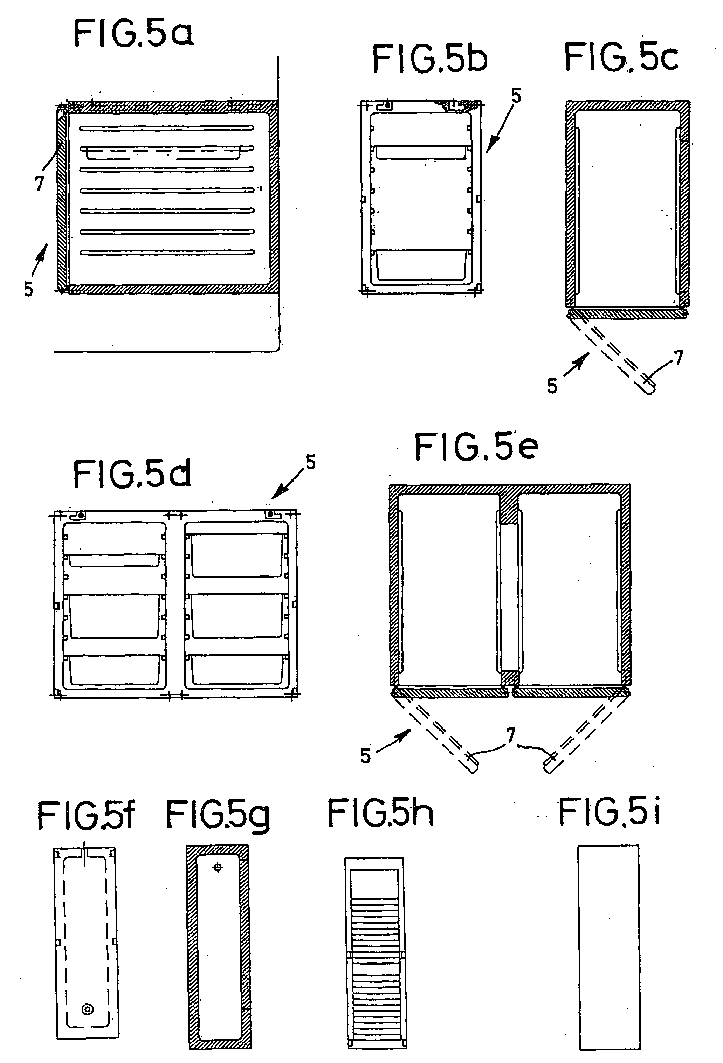

Die Figuren 5a bis 5i zeigen die Komponenten zweiter unterschiedlicher Unterschränke 5, welche jeweils als Kühlschrank ausgestaltet sind. Fig. 5a zeigt einen Längsschnitt durch einen derartigen Kühlschrank, die Figuren 5b und 5c zeigen einen Querschnitt in zwei Schnittrichtungen durch einen schmalen derartigen Kühl-Unterschrank 5 und die Figuren 5d und 5e zeigen ähnliche Schnitte wie die Figuren 5b und 5d, wobei hier jedoch ein Doppel-Schrank vorgesehen ist. Die Figuren 5f und 5g zeigen ein Verdampferfach in zwei unterschiedlichen Ansichten und die Figuren 5h und 5i zeigen ein Kälte-Maschinen-Fach in ebenfalls zwei unterschiedlichen Ansichten.

Durch die unterschiedlichen, modulartig miteinander kombinierbaren Unterschränke 5 und durch unterschiedlich bemessene Regalböden 12, die als Zwischenplatten zwischen zwei Unterschränke einsetzbar sind, sowie durch die Fußleisten 14 wird insgesamt ein modulartig kombinierbares System geschaffen, bei dem sich mit Standartelementen beliebig konfigurierbare Tischanlagen für den Großenküchenbereich schaffen lassen. Dabei sind selbstverständlich Abwandlungen der rein beispielhaft dargestellten Module denkbar, zum Beispiel andere Abmessungen und / oder Einteilungen der Unterschränke.

## Patentansprüche

1. Großküchen-Arbeitstisch-Anlage,
mit einer Tischplatte,
und mit einem Unterbau, welcher wenigstens einen Unterschrank aufweist,
wobei der Unterschrank erhöhte Hygieneanforderungen erfüllend ausgestaltet ist, wie durch fugenlos aneinander grenzende Innenwandungen und / oder gerundete Innenkanten, '
**dadurch gekennzeichnet,**
**dass** der Unterschrank (5) lösbar an dem Unterbau (3) und / oder an der Tischplatte (2) befestigt ist,
wobei an dem Unterbau (3) und / oder an der Tischplatte (2) Halterungen zur Aufnahme mehrerer Unterschränke (5) vorgesehen sind.

2. Großküchen-Arbeitstisch-Anlage nach Anspruch 1, **dadurch gekennzeichnet, dass** der Unterschrank (5) als Kunststoffbehälter (6) ausgestaltet ist.

3. Großküchen-Arbeitstisch-Anlage nach Anspruch 1 oder 2, **dadurch gekennzeichnet, dass** der Korpus des Unterschrankes (5) einteilig, fugenlos und mit gerundeten Kanten an seinen Innenwandungen ausgestaltet ist.

4. Großküchen-Arbeitstisch-Anlage nach einem der vorhergehenden Ansprüche, **dadurch gekennzeichnet, dass** der Unterschrank (5) eine Tür (7) aufweist, welche mit einem die Luft im Behälterinneren umwälzenden Gebläse versehen ist.

5. Großküchen-Arbeitstisch-Anlage nach einem der vorhergehenden Ansprüche, **dadurch gekennzeichnet, dass** der Unterschrank (5) eine Tür (7) aufweist, welche mit einer Heiz- und / oder Kühleinrichtung ausgestaltet ist.

6. Großküchen-Arbeitstisch-Anlage nach einem der vorhergehenden Ansprüche, **dadurch gekennzeichnet, dass** die Tür (7) vom Korpus des Unterschrankes (5) lösbar ist.

7. Großküchen-Arbeitstisch-Anlage nach einem der vorhergehenden Ansprüche, **dadurch gekennzeichnet, dass** die Abmessungen des Unterschrankes (5) einer in der Gastronomie geltenden Norm entsprechen.

8. Großküchen-Arbeitstisch-Anlage nach Anspruch 2, **dadurch gekennzeichnet, dass** der Kunststoffbehälter (6) einteilig hergestellt ist, wie mittels Rotomoulding-, Spritzguss-, Tiefzieh- oder Blasverfahren.

## Claims

1. Large scale catering kitchen work table installation having a table top and having a sub-structure that has at least one lower cupboard, the lower cupboard being constructed so as to fulfil stringent hygiene requirements, such as by gap free adjoining internal walls and/or rounded internal edges, **characterised in that** the lower cupboard (5) is releasably secured to the sub-structure (3) and/or to the table top (2), holding means being provided at the sub-structure (3) and/or at the table top (2) for receiving a plurality of lower cupboards (5). [Translator's note: the German term "Grossküche", which is here translated as "large scale catering kitchen", is defined in the introduction to the specification as as one in which meals are prepared professionally for a larger number of people as for example in canteens or hospitals].

2. Large scale catering kitchen work table installation according to claim 1, **characterised in that** the lower cupboard (5) is constructed as a plastics container (6).

3. Large scale catering kitchen work table installation according to claim 1 or 2, **characterised in that** the body of the lower cupboard (5) is constructed in one piece, gap free and with rounded edges at its interior walls.

4. Large scale catering kitchen work table installation according to one of the preceding claims, **characterised in that** the lower cupboard (5) has a door (7) provided with a fan which circulates the air in the interior of the container.

5. Large scale catering kitchen work table installation according to one of the preceding claims, **characterised in that** the lower cupboard (5) has a door (7) constructed with a heating and/or cooling apparatus.

6. Large scale catering kitchen work table installation according to one of the preceding claims, **characterised in that** the door (7) is releasable from the body of the lower cupboard (5).

7. Large scale catering kitchen work table installation according to one of the preceding claims, **characterised in that** the dimensions of the lower cupboard (5) correspond to one of the standards current in the catering trade.

8. Large scale catering kitchen work table installation according to claim 2, **characterised in that** the plastics container (6) is manufactured in one piece, as by means of rotomoulding, injection moulding, deep drawing or a blow moulding process.

## Revendications

1. Installation à plan de travail pour cuisine collective comprenant un plateau de travail et une structure inférieure, qui comporte au moins une armoire inférieure, l'armoire inférieure étant conçue pour répondre à de sévères exigences d'hygiène, telles que des parois intérieures adjacentes sans joint et/ou des bords intérieurs arrondis, **caractérisée en ce que** l'armoire inférieure (5) est fixée de manière amovible contre la structure inférieure (3) et/ou contre le plateau de travail (2), des supports destinés à recevoir plusieurs armoires inférieures (5) étant prévus contre la structure inférieure (3) ou contre le plateau de travail (2).

2. Installation à plan de travail pour cuisine collective selon la revendication 1, **caractérisée en ce que** l'armoire inférieure (5) est conçue sous forme de caisson (6) en matière plastique.

3. Installation à plan de travail pour cuisine collective selon la revendication 1 ou 2, **caractérisée en ce que** le corps de l'armoire inférieure (5) est conçu en une seule pièce, sans joint et avec des bords arrondis au niveau de ses parois intérieures.

4. Installation à plan de travail pour cuisine collective selon l'une quelconque des revendications précédentes, **caractérisée en ce que** l'armoire inférieure (5) comporte une porte (7), qui est munie d'un ventilateur brassant l'air à l'intérieur du caisson.

5. Installation à plan de travail pour cuisine collective selon l'une quelconque des revendications précédentes, **caractérisée en ce que** l'armoire inférieure (5) comporte une porte (7), qui est munie d'un dispositif de chauffage et/ou de refroidissement.

6. Installation à plan de travail pour cuisine collective selon l'une quelconque des revendications précédentes, **caractérisée en ce que** la porte (7) peut être démontée du corps de l'armoire inférieure (5).

7. Installation à plan de travail pour cuisine collective selon l'une quelconque des revendications précédentes, **caractérisée en ce que** les dimensions de l'armoire inférieure (5) correspondent à une norme en vigueur dans la gastronomie.

8. Installation à plan de travail pour cuisine collective selon la revendication 2, **caractérisée en ce que** le caisson (6) en matière plastique est réalisé d'un seul tenant, par exemple au moyen d'un procédé de moulage par rotation, d'un procédé de moulage par injection, d'un procédé d'emboutissage profond ou d'un procédé de moulage par soufflage.
